# EUROPÄISCHE PATENTSCHRIFT

(11) **EP 0 527 303 B1**
(45) Veröffentlichungstag und Bekanntmachung des Hinweises auf die Patenterteilung: **23.08.1995**
(21) Anmeldenummer: 92109514.7
(22) Anmeldetag: 05.06.1992
(51) Int. Cl.: C09K 21/12, C09K 21/10, C09K 21/14

(54) **Dämmschichtbildendes Feuerschutzmittel**
Insulation-forming material for fire protection
Matière ignifuge formant une couche isolante

(30) Priorität: 08.08.1991 DE 4126271
(43) Veröffentlichungstag der Anmeldung: 17.02.1993
(73) Patentinhaber: DESOWAG GmbH, D-40476 Düsseldorf (DE)
(72) Erfinder: Hellwig, Volker, Dr., W-4150 Krefeld 1 (DE)
(74) Vertreter: Sparing - Röhl - Henseler Patentanwälte

(56) Entgegenhaltungen:
- DE-A- 2 807 697
- DE-A- 3 444 163
- DE-B- 1 794 343
- US-A- 4 058 643
- US-A- 4 205 022
- DERWENT ACCESSION, NR. 77-87 581y, Questel Telesystems (WPIL), DERWENT PUBLICATIONS LTD., London, GB; & JP-A-52 128 929
- DERWENT ACCESSION, NR. 75-334 054, Questel Telesystems (WPIL), DERWENT PUBLICATIONS LTD., London, GB; & JP-B-75 010 344
- DERWENT ACCESSION, NR. 73-73 933v, Questel Telesystems (WPIL), DERWENT PUBLICATIONS LTD., London, GB; & JP-B-73 039 391

## Beschreibung

Die vorliegende Erfindung betrifft ein dämmschichtbildendes Feuerschutzmittel auf der Basis von im Brandfall schaumschichtbildenden und kohlenstoffbildenden Substanzen, filmbildenden Bindemitteln, Füllstoffen, organisch-chemischen Lösemitteln und/oder Wasser.

Aus der DE-AS 17 94 343 ist ein feuerhemmendes Anstrichmittel bekannt, das aus einer wäßrigen Dispersion eines filmbildenden Polymerisats und sich aufblähenden Feststoffen besteht. Letztere setzen sich aus kohlenstoffbildenden Feststoffen und einem wasserlöslichen Ammoniumphosphat zusammen. Diese feuerhemmenden Anstriche liefern gemäß den Angaben in der Beschreibung im Brandfall nur eine relativ geringe Schaumhöhe.

In der DE-OS 28 07 697 wird eine in der Hitze aufschäumende Feuerschutzmasse beschrieben, die ein wärmereaktives Phenolharz, ein Ammoniumsalz, ein Kohlehydrat, eine wärmezersetzliche organische Stickstoffverbindung, gegebenenfalls ein Bindemittel sowie Wasser und/oder ein organisches Lösemittel enthält. Es wird zur Sicherung von Türfalzen gegen den Durchtritt von Feuer im Brandfall eingesetzt. Zur Erzielung einer großen Schaumhöhe ist hier ein dicker, pastenförmiger Auftrag der Feuerschutzmasse erforderlich. Eine derart hohe Auftragsmenge ist jedoch unwirtschaftlich, wenn große Flächen feuerschützend ausgerüstet werden sollen.

Aufgabe der vorliegenden Erfindung war es daher, ein dämmschichtbildendes Feuerschutzmittel zur Verfügung zu stellen, das bereits in einer geringen Auftragsmenge eine große Schaumhöhe im Brandfall entwickelt. Es sollte bei relativ niedriger Brandtemperatur aufschäumen und eine weitgehend rißfreie Schaumoberfläche auf dem zu schützenden Untergrund bilden. Darüber hinaus sollte das erfindungsgemäße Feuerschutzmittel eine gute Isolierung des Untergrundes gegenüber Temperatureinwirkung gewährleisten.

Erfindungsgemäß wurde festgestellt, daß diese Aufgabe durch ein dämmschichtbildendes Feuerschutzmittel auf der Basis von im Brandfall schaumschichtbildenden und kohlenstoffbildenden Substanzen, Bindemitteln, Füllstoffen und Lösemitteln und/oder Wasser gelöst wird, das
20 bis 48 Gew.-%
eines Ammoniumsalzes einer Phosphorsäure und/oder Polyphosphorsäure als schaumbildende Substanz,
10 bis 17 Gew.-%
Melamin und/oder eines Melaminesters und/oder Melamin-Formaldehydharzes,
3 bis 20 Gew.-%
einer kohlenstoffbildenden Substanz,
7 bis 20 Gew.-%
eines oder mehrerer organisch-chemischer Bindemittel sowie Rest Lösemittel bzw. Lösemittelgemische und/oder Wasser, Hilfsmittel wie Verdicker, Hydrophobierungsmittel, Emulgatoren, Verflüssiger, Netzmittel und Konservierungsmittel enthält, wobei das Verhältnis Melamin und/oder Melaminester und/oder Melamin-Formaldehydharz zum Ammoniumsalz der Phosphorsäure oder Polyphosphorsäure höchstens 1:2 beträgt. In einer bevorzugten Variante der Erfindung beträgt das vorstehende Verhältnis 1:2 bis 1:2,8.

Erfindungsgemäß ist weiterhin ein dämmschichtbildendes Feuerschutzmittel auf der Basis von im Brandfall schaumschichtbildenden und kohlenstoffbildenden Substanzen, Bindemitteln, Füllstoffen und Lösemitteln und/oder Wasser, das
21 bis 42 Gew.-%
eines Ammoniumsalzes einer Phosphorsäure und/oder Polyphosphorsäure als schaumbildende Substanz,
11 bis 15 Gew.-%
Melamin und/oder eines Melaminesters und/oder Melamin-Formaldehydharzes,
4 bis 12 Gew.-%
einer kohlenstoffbildenden Substanz,
10 bis 15 Gew.-%
eines oder mehrerer organisch-chemischer Bindemittel sowie Rest Lösemittel bzw. Lösemittelgemische und/oder Wasser, Hilfsmittel wie Verdicker, Hydrophobierungsmittel, Emulgatoren, Verflüssiger, Netzmittel und Konservierungsmittel enthält, wobei das Verhältnis Melamin und/oder Melaminester und/oder Melamin-Formaldehydharz zum Ammoniumsalz der Phosphorsäure oder Polyphosphorsäure
1 : 2,05 bis 1 : 2,6 oder in einer in einer Variante dieser Zusammensetzung 1 : 3,5 bis 1 : 4,3
beträgt.

Als Ammoniumsalze der Phosphorsäure können Mono- oder Diammoniumorthophosphat, Mono- oder Diammoniumpyrophosphat, als Ammoniumsalze der Polyphosphorsäure wasserlösliche oder wasserunlösliche bzw. wasserschwerlösliche Ammoniumpolyphosphate eingesetzt werden, ebenso substituierte Ammoniumpolyphosphate.

Als organisch-chemisches Bindemittel wird erfindungsgemäß ein stickstoffreies Bindemittel oder ein Gemisch aus mindestens einem stickstoffreien Bindemittel und mindestens einem stickstoffhaltigen Bindemittel eingesetzt. Als stickstoffreie Bindemittel werden erfindungsgemäß Styrol-, Methylstyrol- oder Vinyltoluol-Acrylatharz, Polyvinylacetat oder Alkydharze allein oder in Mischung, vorzugsweise Styrol-Acrylatharz eingesetzt. Als stickstoffhaltige Bindemittel werden Harnstoff-Formaldehydharz und/oder Dicyandiamid-Formaldehydharz eingesetzt. Diese Bindemittel gelangen in Form von Lösungen in organisch-chemischen Lösemitteln oder Lösemittelgemischen oder in Form wäßriger Dispersionen bzw. lösemittelhaltiger Emulsionen in Wasser zum Einsatz, je nach Einsatzgebiet des dämmschichtbildenden Feuerschutzmittels.

Als schaumbildende Substanz kann nach einer Ausführungsform der Erfindung zusätzlich 0 bis 8 Gew.-%, vorzugsweise 0,05 bis 5 Gew.-% Dicyandiamid eingesetzt werden. Als organisch-chemische Lösemittel können polare und/oder unpolare Lösemittel, z.B. aliphatische Lösemittel, aromatische Lösemittel, Ester, Esteralkohole oder Alkohole verwendet werden.

Gemäß einer weiteren Ausführungsform enthält das erfindungsgemäße dämmschichtbildende Feuerschutzmittel zusätzlich
0,5 bis 10 Gew.-%, vorzugsweise
1 bis 4 Gew.-%
eines organischen Phosphorsäureesters oder Phosphorsäureteilesters.

Besonders vorteilhaft hat es sich im Rahmen der vorliegenden Erfindung erwiesen, wenn das dämmschichtbildende Feuerschutzmittel zusätzlich
0,5 bis 15 Gew.-%, vorzugsweise
3 bis 10 Gew.-%
Glas- oder Mineralfasern, Mineralpulver, Alkali- oder Erdalkalisilikate, Kaolin, Glimmer, Trassmehl, Talkum, Schiefermehl, Mineralwolle (Steinwolle), Schlackenwolle, Hüttenwolle, Bariumsulfat, Eisenoxyd, Titandioxyd, Aluminiumhydroxid, Magnesiumhydroxid, Calciumcarbonat, Magnesiumcarbonat, Borsäure oder durch Ammoniak oder eine Aminoverbindung neutralisierte Borsäure, vorzugsweise Titandioxid, als Füllstoffe enthält.

Durch den Zusatz dieser Füllstoffe läßt sich erreichen, daß im Brandfall die Schaumschicht längere Zeit auf dem Substrat haftet, beispielsweise über 30 Minuten und eine verbesserte Temperaturbeständigkeit des Schaums bei Temperaturen > 800 °C erzielt wird.

Als kohlenstoffbildende Substanz werden erfindungsgemäß Kohlenhydrate wie Pentaerythrit und/oder Dipentaerythrit und/oder Tripentaerythrit und/oder Polykondensate des Pentaerythrits eingesetzt.

Es hat sich als vorteilhaft erwiesen, wenn das Verhältnis des organisch-chemischen Bindemittels zur kohlenstoffbildenden Substanz
5 : 1 bis 1,1 : 1, vorzugsweise
3 : 1 bis 1,3 : 1
beträgt.

Das erfindungsgemäße Feuerschutzmittel gelangt in Form eines streich-, spritz- oder rollfähigen Anstrichmittels zum Schutz von unterschiedlichsten Untergründen, vorzugsweise von Stahl und Holz, zum Einsatz.

### Beispiele:

| Beispiel 1: (erfindungsgemäß) | |
|---|---|
| Xylol | 25 % |
| Styrol-Acrylatharz | 16 % |
| Melamin | 12 % |
| Ammoniumpolyphosphat | 29 % |
| Pentaerythrit | 10 % |
| Titandioxid | 8 % |
| | 1̅0̅0̅ %̅ |

| Beispiel 2: (erfindungsgemäß) | |
|---|---|
| Xylol | 27 % |
| Styrol-Acrylatharz | 15 % |
| Melamin | 9 % |
| Ammoniumpolyphosphat | 38 % |
| Pentaerythrit | 6 % |
| Titandioxid | 5 % |
| | 1̅0̅0̅ %̅ |

Diese Feuerschutzmittel wurden auf ihre Eigenschaften als dämmschichtbildendes Feuerschutzmittel geprüft. Dabei wurde bei einer Anstrichmitteldicke von 0,8 mm bei Feuereinwirkung ein Schaum mit einer Höhe von 15 bis 30 mm entwickelt. Nach dem Aufschäumen bleibt eine rißfreie Oberfläche erhalten.

| Beispiel 3 (nicht erfindungsgemäß): | |
|---|---|
| Xylol | 25 % |
| Acrylatharz | 16 % |
| Melamin | 18 % |
| Ammoniumpolyphosphat | 25 % |
| Pentaerythrit | 10 % |
| Titandioxid | 6 % |
| | 1̅0̅0̅ %̅ |

In diesem Beispiel liegt das Verhältnis von Melamin zum Ammoniumsalz der Phosphorsäure außerhalb des im Anspruch 1 beanspruchten Verhältnisses, so daß im Vergleich zum Beispiel 1 eine weitaus geringere Schaumhöhe von 1-2 mm bei Brandeinwirkung resultierte.

## Patentansprüche

1. Dämmschichtbildendes Feuerschutzmittel auf der Basis von im Brandfall schaumschichtbildenden und kohlenstoffbildenden Substanzen, Bindemitteln, Füllsstoffen und Lösemitteln und/oder Wasser, dadurch gekennzeichnet, daß es
20 bis 48 Gew.-%
eines Ammoniumsalzes einer Phosphorsäure und/oder Polyphosphorsäure als schaumbildende Substanz,
10 bis 17 Gew.-%
Melamin und/oder eines Melaminesters und/oder Melamin-Formaldehydharzes,
3 bis 20 Gew.-%
einer kohlenstoffbildenden Substanz,
7 bis 20 Gew.-%
eines oder mehrerer organisch-chemischer Bindemittel sowie Rest Lösemittel bzw. Lösemittelgemische und/oder Wasser, Hilfsmittel wie Verdicker, Hydrophobierungsmittel, Verflüssiger, Netzmittel, Emulgatoren und Konservierungsmittel enthält, wobei das Verhältnis Melamin und/oder Melaminester und/oder Melamin-Formaldehydharz zum Ammoniumsalz der Phosphorsäure und/oder Polyphosphorsäure höchstens 1:2 beträgt.

2. Dämmschichtbildendes Feuerschutzmittel nach Anspruch 1, dadurch gekennzeichnet, daß das Verhältnis Melamin und/oder Melaminester und/oder Melamin-Formaldehydharz zum Ammoniumsalz der Phosphorsäure und/oder Polyphosphorsäure 1:2 bis 1:2,8 beträgt.

3. Dämmschichtbildendes Feuerschutzmittel nach Anspruch 1, dadurch gekennzeichnet, daß es
21 bis 42 Gew.-%
eines Ammoniumsalzes einer Phosphorsäure und/oder Polyphosphorsäure als schaumbildende Substanz,
11 bis 15 Gew.-%
Melamin und/oder eines Melaminesters und/oder Melamin-Formaldehydharzes,
4 bis 12 Gew.-%
einer kohlenstoffbildenden Substanz,
10 bis 15 Gew.-%
eines oder mehrerer organisch-chemischer Bindemittel sowie Rest Lösemittel bzw. Lösemittelgemische und/oder Wasser, Hilfsmittel wie Verdicker, Hydrophobierungsmittel, Verflüssiger, Netzmittel, Emulgatoren und Konservierungsmittel enthält, wobei das Verhältnis Melamin und/oder Melaminester und/oder Melamin-Formaldehydharz zum Ammoniumsalz der Phosphorsäure und/oder Polyphosphorsäure
1 : 2,05 bis 1 : 2,6
beträgt.

4. Dämmschichtbildendes Feuerschutzmittel nach Anspruch 1, dadurch gekennzeichnet, daß es
21 bis 42 Gew.-%
eines Ammoniumsalzes einer Phosphorsäure und/oder Polyphosphorsäure als schaumbildende Substanz,
11 bis 15 Gew.-%
Melamin und/oder eines Melaminesters und/oder Melamin-Formaldehydharzes,
4 bis 12 Gew.-%
einer kohlenstoffbildenden Substanz,
10 bis 15 Gew.-%
eines oder mehrerer organisch-chemischer Bindemittel sowie Rest Lösemittel bzw. Lösemittelgemische und/oder Wasser, Hilfsmitel wie Verdicker, Hydrophobierungsmittel, Verflüssiger, Netzmittel, Emulgatoren und Konservierungsmittel enthält, wobei das Verhältnis Melamin und/oder Melaminester und/oder Melamin-Formaldehydharz zum Ammoniumsalz der Phosphorsäure und/oder Polyphosphorsäure
1 : 3,5 bis 1 : 4,3
beträgt.

5. Dämmschichtbildendes Feuerschutzmittel nach einem der Ansprüche 1 bis 4, dadurch gekennzeichnet, daß es als organisch-chemisches Bindemittel ein stickstoffreies Bindemittel oder ein Gemisch aus mindestens einem stickstoffreien Bindemittel und mindestens einem stickstoffhaltigen Bindemittel enthält.

6. Dämmschichtbildendes Feuerschutzmittel nach Anspruch 5, dadurch gekennzeichnet, daß es als stickstoffreies Bindemittel Styrol-, Methylstyrol- oder Vinyltoluol-Acrylatharz, Polyvinylacetat, Polyvinylacetat-Copolymerisat oder Alkydharz enthält.

7. Dämmschichtbildendes Feuerschutzmittel nach Anspruch 5, dadurch gekennzeichnet, daß es als stickstoffhaltiges Bindemittel ein Harnstoff-Formaldehydharz und/oder ein Dicyandiamid-Formaldehydharz enthält.

8. Dämmschichtbildendes Feuerschutzmittel nach einem der Ansprüche 1 bis 7, dadurch gekennzeichnet, daß es als schaumbildende Substanz zusätzlich
0 bis 8 Gew.-%, vorzugsgweise
0,05 bis 5 Gew.-%
Dicyandiamid enthält.

9. Dämmschichtbildendes Feuerschutzmittel nach einem der Ansprüche 1 bis 8, dadurch gekennzeichnet, daß es zusätzlich
0,5 bis 10 Gew.-%, vorzugsweise
1 bis 4 Gew.-%
eines organischen Phosphorsäureesters oder Phosphorsäureteilesters enthält.

10. Dämmschichtbildendes Feuerschutzmittel nach einem der Ansprüche 1 bis 9, dadurch gekennzeichnet, daß es zusätzlich
0,5 bis 15 Gew.-%, vorzugsweise
3 bis 10 Gew.-%
Glas- oder Mineralfasern, Mineralpulver, Alkali- oder Erdalkalisilikate, Kaolin, Glimmer, Trassmehl, Talkum, Schiefermehl, Mineralwolle (Steinwolle), Schlackenwolle, Hüttenwolle, Bariumsulfat, Eisenoxyd, Titandioxyd, Alminiumhydroxid, Magnesiumhydroxid, Calciumcarbonat, Magnesiumcarbonat, Borsäure oder durch Ammoniak oder eine Aminoverbindung neutralisierte Borsäure enthält.

11. Dämmschichtbildendes Feuerschutzmittel nach einem der Ansprüche 1 bis 10, dadurch gekennzeichnet, daß es als kohlenstoffbildende Substanz ein Kohlenhydrat wie Pentaerythrit und/oder Dipentaerythrit und/oder Tripentaerythrit und/oder Polykondensate des Pentaerythrits enthält.

12. Dämmschichtbildendes Feuerschutzmittel nach einem der Ansprüche 1 bis 11, dadurch gekannzeichnet, daß das Verhältnis des organisch-chemischen Bindemittels zur kohlenstoffbildenden Substanz
5 : 1 bis 1,1 : 1, vorzugsweise
3,0 : 1 bis 1,3 : 1
beträgt.

## Claims

1. An insulation-forming fire-protection agent on the basis of substances which in the event of fire form a foam layer and carbon, binders, fillers and solvents and/or water, characterised in that it contains
20 to 48% by weight
of an ammonium salt of a phosphoric acid and/or polyphosphoric acid as foam-forming substance,
10 to 17% by weight
melamine and/or a melamine ester and/or melamine-formaldehyde resin,
3 to 20% by weight
of a carbon-forming substance,
7 to 20% by weight
of one or more organic-chemical binders, and remainder solvent or solvent mixtures and/or water, auxiliaries such as thickeners, hydrophobing agents, liquefiers, wetting agents, emulsifiers and preservatives, with the ratio of melamine and/or melamine ester and/or melamine-formaldehyde resin to ammonium salt of the phosphoric acid and/or polyphosphoric acid being at most 1:2.

2. An insulation-forming fire-protection agent according to Claim 1, characterised in that the ratio of melamine and/or melamine ester and/or melamine-formaldehyde resin to the ammonium salt of the phosphoric acid and/or polyphosphoric acid is 1:2 to 1:2.8.

3. An insulation-forming fire-protection agent according to Claim 1, characterised in that it contains
21 to 42% by weight
of an ammonium salt of a phosphoric acid and/or polyphosphoric acid as foam-forming substance,
11 to 15% by weight
melamine and/or a melamine ester and/or melamine-formaldehyde resin,
4 to 12% by weight
of a carbon-forming substance,
10 to 15% by weight
of one or more organic-chemical binders, and remainder solvent or solvent mixtures and/or water, auxiliaries such as thickeners, hydrophobing agents, liquefiers, wetting agents, emulsifiers and preservatives, with the ratio of melamine and/or melamine ester and/or melamine-formaldehyde resin to ammonium salt of the phosphoric acid and/or polyphosphoric acid being
1 : 2.05 to 1 : 2.6.

4. An insulation-forming fire-protection agent according to Claim 1, characterised in that it contains
21 to 42% by weight
of an ammonium salt of a phosphoric acid and/or polyphosphoric acid as foam-forming substance,
11 to 15% by weight
melamine and/or a melamine ester and/or melamine-formaldehyde resin,
4 to 12% by weight
of a carbon-forming substance,
10 to 15% by weight
of one or more organic-chemical binders, and remainder solvent or solvent mixtures and/or water, auxiliaries such as thickeners, hydrophobing agents, liquefiers, wetting agents, emulsifiers and preservatives, with the ratio of melamine and/or melamine ester and/or melamine-formaldehyde resin to ammonium salt of the phosphoric acid and/or polyphosphoric acid being
1 : 3.5 to 1 : 4.3.

5. An insulation-forming fire-protection agent according to one of Claims 1 to 4, characterised in that it contains as organic-chemical binder a nitrogen-free binder or a mixture of at least one nitrogen-free binder and at least one nitrogen-containing binder.

6. An insulation-forming fire-protection agent according to Claim 5, characterised in that it contains styrene-, methylstyrene- or vinyltoluene-acrylate resin, polyvinyl acetate, polyvinyl acetate copolymer or alkyd resin as nitrogen-free binder.

7. An insulation-forming fire-protection agent according to Claim 5, characterised in that it contains as nitrogen-containing binder a urea-formaldehyde resin and/or a dicyandiamide-formaldehyde resin.

8. An insulation-forming fire-protection agent according to one of Claims 1 to 7, characterised in that it additionally contains as foam-forming substance
0 to 8% by weight, preferably
0.05 to 5% by weight,
dicyandiamide.

9. An insulation-forming fire-protection agent according to one of Claims 1 to 8, characterised in that it additionally contains
0.5 to 10% by weight, preferably
1 to 4% by weight,
of an organic phosphoric acid ester or phosphoric acid partial ester.

10. An insulation-forming fire-protection agent according to one of Claims 1 to 9, characterised in that it additionally contains
0.5 to 15% by weight, preferably
3 to 10% by weight,
glass or mineral fibres, mineral powder, alkali silicates or alkaline earth silicates, kaolin, mica, trass flour, talcum, slate flour, mineral wool (rock wool), slag wool, barium sulphate, iron oxide, titanium dioxide, aluminium hydroxide, magnesium hydroxide, calcium carbonate, magnesium carbonate, boric acid or boric acid neutralised by ammonia or an amino compound.

11. An insulation-forming fire-protection agent according to one of Claims 1 to 10, characterised in that it contains as the carbon-forming substance a carbohydrate such as pentaerythrite and/or dipentaerythrite and/or tripentaerythrite and/or polycondensates of pentaerythrite.

12. An insulation-forming fire-protection agent according to one of Claims 1 to 11, characterised in that the ratio of the organic-chemical binder to the carbon-forming substance is
5 : 1 to 1.1 : 1, preferably
3.0 : 1 to 1.3 : 1.

## Revendications

1. Produit d'ignifugation formant une couche isolante, à base de substances qui, en cas d'incendie, forment une couche de mousse et du carbone, de liants, de charges et de solvants et/ou d'eau, caractérisé en ce qu'il contient
de 20 à 48 % en poids
d'un sel d'ammonium d'un acide phosphorique et/ou d'un acide polyphosphorique, servant de substance moussante,
10 à 17 % en poids
de mélamine et/ou d'un ester de mélamine et/ou d'une résine de mélamine-formaldéhyde,
3 à 20 % en poids
d'une substance formant du carbone,
7 à 20 % en poids
d'un ou plusieurs liants de la chimie organique, le reste comprenant des solvants ou des mélanges de solvants et/ou de l'eau, des adjuvants tels que des épaississants, des agents d'hydrophobisation, des diluants, des mouillants, des émulsifiants et des conservateurs, le rapport de la mélamine et/ou de l'ester de mélamine et/ou de la résine de mélamine-formaldéhyde au sel d'ammonium de l'acide phosphorique et/ou de l'acide polyphosphorique étant au plus de 1:2.

2. Produit d'ignifugation formant une couche isolante selon la revendication 1, caractérisé en ce que le rapport de la mélamine et/ou de l'ester de mélamine et/ou de la résine de mélamine-formaldéhyde au sel d'ammonium de l'acide phosphorique et/ou de l'acide polyphosphorique est de 1:2 à 1:2,8.

3. Produit d'ignifugation formant une couche isolante selon la revendication 1, caractérisé en ce qu'il contient
de 21 à 42 % en poids
d'un sel d'ammonium d'un acide phosphorique et/ou d'un acide polyphosphorique, servant de substance moussante,
11 à 15 % en poids
de mélamine et/ou d'un ester de mélamine et/ou d'une résine de mélamine-formaldéhyde,
4 à 12 % en poids
d'une substance formant du carbone,
10 à 15 % en poids
d'un ou plusieurs liants de la chimie organique, le reste comprenant des solvants ou des mélanges de solvants et/ou de l'eau, des adjuvants tels que des épaississants, des agents d'hydrophobisation, des diluants, des mouillants, des émulsifiants et des conservateurs, le rapport de la mélamine et/ou de l'ester de mélamine et/ou de la résine de mélamine-formaldéhyde au sel d'ammonium de l'acide phosphorique et/ou de l'acide polyphosphorique étant de
1:2,05 à 1:2,6.

4. Produit d'ignifugation formant une couche isolante selon la revendication 1, caractérisé en ce qu'il contient
de 21 à 42 % en poids
d'un sel d'ammonium d'un acide phosphorique et/ou d'un acide polyphosphorique, servant de substance moussante,
11 à 15 % en poids
de mélamine et/ou d'un ester de mélamine et/ou d'une résine de mélamine-formaldéhyde,
4 à 12 % en poids
d'une substance formant du carbone,
10 à 15 % en poids
d'un ou plusieurs liants de la chimie organique, le reste comprenant des solvants ou des mélanges de solvants et/ou de l'eau, des adjuvants tels que des épaississants, des agents d'hydrophobisation, des diluants, des mouillants, des émulsifiants et des conservateurs, le rapport de la mélamine et/ou de l'ester de mélamine et/ou de la résine de mélamine-formaldéhyde au sel d'ammonium de l'acide phosphorique et/ou de l'acide polyphosphorique étant de
1:3,5 à 1:4,3.

5. Produit d'ignifugation formant une couche isolante selon l'une des revendications 1 à 4, caractérisé en ce qu'il contient comme liant de la chimie organique un liant non azoté ou un mélange d'au moins un liant non azoté et d'au moins un liant azoté.

6. Produit d'ignifugation formant une couche isolante selon la revendication 5, caractérisé en ce qu'il contient comme liant non azoté une résine de styrène-acrylate, méthylstyrène-acrylate ou vinyltoluène-acrylate, un poly(acétate de vinyle), un copolymère de poly(acétate de vinyle) ou une résine alkyde.

7. Produit d'ignifugation formant une couche isolante selon la revendication 5, caractérisé en ce qu'il contient comme liant azoté une résine d'urée-formaldéhyde et/ou une résine de diacyanodiamide-formaldéhyde.

8. Produit d'ignifugation formant une couche isolante selon l'une des revendications 1 à 7, caractérisé en ce qu'il contient en outre, en tant que substance moussante
0 à 8 % en poids et de préférence
0,05 à 5 % en poids
de dicyanodiamide.

9. Produit d'ignifugation formant une couche isolante selon l'une des revendications 1 à 8, caractérisé en ce qu'il contient en outre
0,5 à 10 % en poids, et de préférence
1 à 4 % en poids
d'un ester ou d'un ester partiel organique d'un acide phosphorique.

10. Produit d'ignifugation formant une couche isolante selon l'une des revendications 1 à 9, caractérisé en ce qu'il contient en outre
0,5 à 15 % en poids, et de préférence
3 à 10 % en poids
de fibres de verre ou de fibres minérales, d'une poudre minérale, de silicates de métaux alcalins ou alcalinoterreux, de kaolin, de mica, de poudre de trass, de talc, de poudre d'ardoise, de laine minérale (laine de roche), de laine de laitier, de laine de scorie, de sulfate de baryum, d'oxyde de fer, de dioxyde de titane, d'hydroxyde d'aluminium, d'hydroxyde de magnésium, de carbonate de calcium, de carbonate de magnésium, d'acide borique, ou d'acide borique neutralisé par l'ammoniac ou par un composé aminé.

11. Produit d'ignifugation formant une couche isolante selon l'une des revendications 1 à 10, caractérisé en ce qu'il contient comme substance formant du carbone un hydrate de carbone tel que le pentaérythritol et/ou le dipentaérythritol et/ou le tripentaérythritol et/ou les produits de polycondensation du pentaérythritol.

12. Produit d'ignifugation formant une couche isolante selon l'une des revendications 1 à 11, caractérisé en ce que le rapport du liant de la chimie organique à la substance formant du carbone est de
5:1 à 1,1:1, de préférence de
3,0:1 à 1,3:1.
